# EUROPEAN PATENT APPLICATION

(11) **EP 4 796 372 A1**
(43) Date of publication of application: **26.08.2026**
(21) Application number: 26155894.4
(22) Date of filing: 03.02.2026
(51) Int. Cl.: B60L 53/14, B60L 58/12

(54) **CONTROL METHOD OF WORKING MACHINE, WORKING MACHINE CONTROL PROGRAM, WORKING MACHINE CONTROL SYSTEM, AND WORKING MACHINE**

(30) Priority: 21.02.2025 JP 2025026468
(71) Applicant: Yanmar Holdings Co., Ltd., Osaka (JP)
(72) Inventor: SHIGENAGA, Shotaro, Chikugo, Fukuoka (JP); ONITSUKA, Kosuke, Chikugo, Fukuoka (JP); TAMURA, Kazuki, Chikugo, Fukuoka (JP)
(74) Representative: Isarpatent

(57) **Abstract**

[Problem] To provide a control method of a working machine, a working machine control program, a working machine control system, and a working machine that easily prevent damage to parts.

[Solution] A control method of a working machine 3 according to one aspect of the present invention is a control method of the working machine 3 which includes a secondary battery 50 and an electric motor 41 driven by electric power of the secondary battery 50. This control method includes: activating the electric motor 41 by an activation operation; and regulating the activation of the electric motor 41 without depending on the activation operation when activation conditions are not satisfied. The activation conditions include a first condition related to the state of charge of the secondary battery 50.

## Description

### TECHNICAL FIELD

The present invention relates to a control method of a working machine, a working machine control program, and a working machine control system used for a working machine including a secondary battery and an electric motor, and the working machine.

### BACKGROUND ART

As the related art, there is known a working machine (electric construction machine) including an electric motor (motor) as a power source for driving a hydraulic pump and a secondary battery (battery) for supplying electric power to the electric motor (see, for example, Patent Document 1). The working machine according to the related art has a charging mode in which the secondary battery is charged by electric power from an external power supply via a power supply cable connected to a power supply port in a stop state of the working machine.

### PRIOR ART DOCUMENT

### PATENT DOCUMENT

Patent Document 1: JP-A-2022-67276

### SUMMARY OF INVENTION

### TECHNICAL PROBLEM

In the related art described above, for example, if an operator operates the working machine while forgetting to remove the power supply cable from the power supply port after charging of the secondary battery is completed in the charging mode, parts such as the power supply cable are likely to be damaged.

An object of the present invention is to provide a control method of a working machine, a working machine control program, a working machine control system, and a working machine that easily prevent damage to parts.

### SOLUTION TO PROBLEM

A control method of a working machine according to one aspect of the present invention is a control method of a working machine that includes a secondary battery and an electric motor driven by electric power of the secondary battery. The control method includes: activating the electric motor by an activation operation; and regulating the activation of the electric motor without depending on the activation operation when activation conditions are not satisfied. The activation conditions include a first condition related to a state of charge of the secondary battery.

A working machine control program according to one aspect of the present invention is a program for causing one or more processors to execute the control method of the working machine.

A working machine control system according to one aspect of the present invention is used in a working machine including a secondary battery and an electric motor driven by electric power of the secondary battery, and includes an activation processing unit and a regulation processing unit. The activation processing unit activates the electric motor by an activation operation. The regulation processing unit regulates the activation of the electric motor without depending on the activation operation when activation conditions are not satisfied. The activation conditions include a first condition related to a state of charge of the secondary battery.

A working machine according to one aspect of the present invention includes the working machine control system, and a machine body on which the secondary battery and the electric motor are mounted.

### ADVANTAGEOUS EFFECTS OF INVENTION

According to the present invention, it is possible to provide the control method of the working machine, the working machine control program, the working machine control system, and the working machine that easily prevent the damage to the parts.

### BRIEF DESCRIPTION OF DRAWINGS

Fig. 1 is a schematic perspective view illustrating an overall configuration of a working machine according to a first embodiment;
Fig. 2 is a schematic diagram illustrating a hydraulic circuit and the like of the working machine according to the first embodiment;
Fig. 3 is a flowchart illustrating an operation example of a working machine control system according to the first embodiment;
Fig. 4 is a schematic diagram schematically illustrating a state in each of a case where activation conditions of the working machine control system according to the first embodiment are satisfied and a case where the activation conditions are not satisfied; and
Fig. 5 is a flowchart illustrating an operation example of the working machine control system according to the first embodiment.

### DESCRIPTION OF EMBODIMENTS

Hereinafter, an embodiment of the present invention will be described with reference to the accompanying drawings. The following embodiment is an example embodying the present invention, and is not intended to limit the technical scope of the present invention.

### (First Embodiment)

### [1] Overall configuration

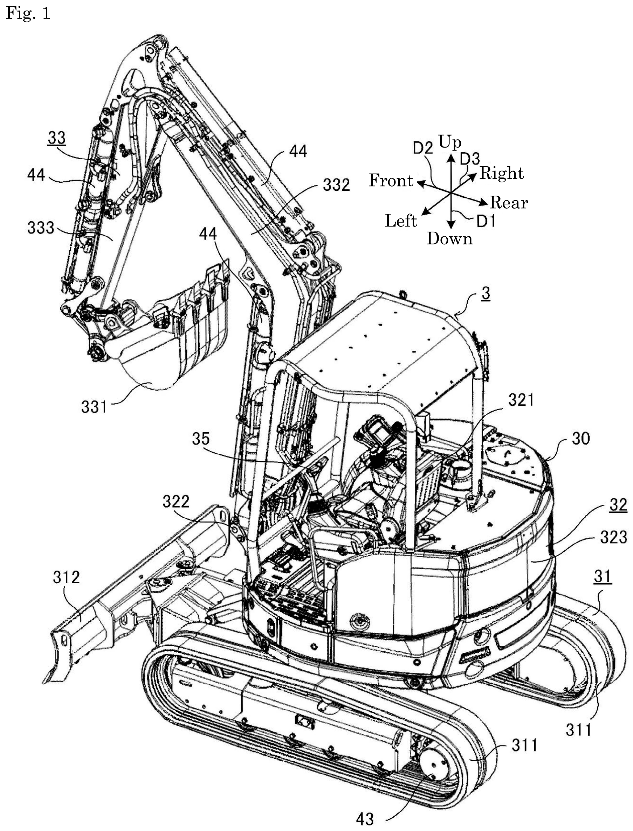

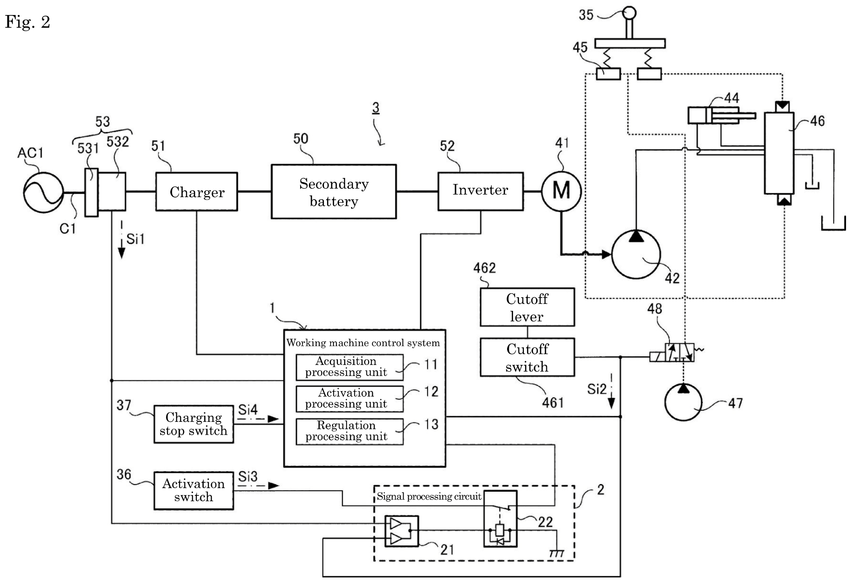

As illustrated in Fig. 1, a working machine 3 according to the present embodiment includes a traveling unit 31, a turning unit 32, and a working unit 33 in a machine body 30. Moreover, as illustrated in Fig. 2, the working machine 3 further includes a working machine control system 1 (hereinafter, also simply referred to as "control system 1"). In addition, as illustrated in Fig. 2, the machine body 30 further includes an operation device 35, an activation switch 36, a charging stop switch 37, an electric motor 41, a secondary battery 50, and the like.

The "working machine" in the present disclosure means various machines for work, and is, for example, a working vehicle such as a backhoe (including a hydraulic excavator, a mini excavator, and the like), a wheel loader, and a carrier. The working machine 3 includes the working unit 33 configured to be able to execute one or more types of work. The working machine 3 is not limited to a "vehicle", and may be, for example, a working ship or a working flying object such as a drone or a multicopter. Furthermore, the working machine 3 is not limited to a construction machine, and may be, for example, an agricultural machine such as a rice transplanter, a tractor, or a combine. In the present embodiment, unless otherwise specified, a case where the working machine 3 is a backhoe with a hanging function (with a crane function), and can execute, as work, not only hanging work but also excavation work, ground leveling work, groove excavation work, loading work, or the like will be described as an example.

Moreover, in the present embodiment, for convenience of description, a vertical direction in a state in which the working machine 3 can be used is defined as an up-down direction D1. Furthermore, in a non-turning state of the turning unit 32, a front-rear direction D2 and a left-right direction D3 are defined with reference to a direction viewed from a user (operator) riding on (a driving unit 321 of) the working machine 3. In other words, each direction used in the present embodiment is a direction defined with reference to the machine body 30 of the working machine 3, a direction in which the machine body 30 moves when the working machine 3 moves forward is "forward", and a direction in which the machine body 30 moves when the working machine 3 moves rearward is "rearward". Similarly, a direction in which a front end portion of the machine body 30 moves when the working machine 3 turns right is "rightward", and a direction in which the front end portion of the machine body 30 moves when the working machine 3 turns left is "leftward". However, these directions are not intended to limit the directions of use (directions during use) of the working machine 3.

In the working machine 3 according to the present embodiment, at least a part of a drive device that generates power is motorized. In the present embodiment, as an example, the working machine 3 is an electric working machine having a power source including the electric motor 41 (see Fig. 2) in a drive mechanism. The electric motor 41 is supplied with electric power (electric energy) and generates power. More specifically, the electric motor 41 is an alternating-current motor (AC electric motor) driven by AC power.

The electric motor 41 operates by being supplied with the electric power from the secondary battery 50 (see Fig. 2) mounted on the machine body 30. The power generated by the electric motor 41 is used at least for driving a hydraulic pump 42 (see Fig. 2) in the drive device.

In the working machine 3, the hydraulic pump 42 is driven by the electric motor 41, and hydraulic oil is supplied from the hydraulic pump 42 to hydraulic actuators (including a hydraulic motor 43, a hydraulic cylinder 44, and the like) of parts of the machine body 30, so that the machine body 30 is driven. Moreover, the working machine 3 is controlled, for example, by the user (operator) riding on the driving unit 321 of the machine body 30 and operating an operation lever or the like of the operation device 35.

In the present embodiment, since it is assumed that the working machine 3 is a riding-type backhoe as described above, the working unit 33 is driven in accordance with the operation of the user (operator) riding on the driving unit 321 and executes work such as excavation work. The driving unit 321 on which the user rides is provided in the turning unit 32. In the example of Fig. 1, the driving unit 321 of a canopy type is exemplified, but the driving unit 321 is preferably of a cabin type. The driving unit 321 of the cabin type includes a cabin, and the user rides in a cabin space inside the cabin. The driving unit 321 of the canopy type includes a canopy (roof), and the user rides in a space below the canopy. Furthermore, the driving unit 321 is not limited to the cabin type and the canopy type, and may be, for example, a floor type or the like that does not include a cabin and a canopy, and that allows the user to ride in a space opened upward.

The traveling unit 31 has a traveling function and is configured to be able to travel (including turn) on the ground. The traveling unit 31 includes, for example, a pair of left and right crawlers 311, a blade 312, and the like. The traveling unit 31 further includes the traveling hydraulic motor 43 (hydraulic actuator) and the like for driving the crawlers 311.

The turning unit 32 is located above the traveling unit 31, and is configured to be able to turn about a rotation axis along the vertical direction with respect to the traveling unit 31. The turning unit 32 includes a turning hydraulic motor (hydraulic actuator) and the like. In addition to the driving unit 321, the electric motor 41, the hydraulic pump 42, and the like are mounted on the turning unit 32. Furthermore, a boom bracket 322 to which the working unit 33 is attached is provided at a front end portion of the turning unit 32.

The working unit 33 is configured to be capable of executing work including hanging work. The working unit 33 is supported by the boom bracket 322 of the turning unit 32 and executes work. The working unit 33 includes a bucket 331, a boom 332, an arm 333, and the like. The working unit 33 further includes hydraulic actuators (including the hydraulic cylinder 44, a hydraulic motor, and the like) for driving each unit.

The bucket 331 is a type of attachment (work tool) attached to the machine body 30 of the working machine 3, and includes an arbitrary instrument selected from a plurality of types of attachments according to the content of work. As an example, the bucket 331 is detachably attached to the machine body 30 and replaced according to the content of work. Examples of the attachment for the working machine 3 include, in addition to the bucket 331, various tools such as a breaker, an auger, a crusher, a fork, a fork claw, a steel cutter, an asphalt cutting machine, a mower, a ripper, a mulcher, a tilt rotator, and a tamper. The working unit 33 executes work by driving the bucket 331 using power from the drive device.

The boom 332 is rotatably supported by the boom bracket 322 of the turning unit 32. Specifically, the boom 332 is supported by the boom bracket 322 so as to be rotatable about the rotation axis along the horizontal direction. The boom 332 has a shape extending upward from the base end portion thereof supported by the boom bracket 322. The arm 333 is coupled to a distal end of the boom 332. The arm 333 is supported so as to be rotatable about a rotation axis along the horizontal direction with respect to the boom 332. The bucket 331 is attached to a distal end of the arm 333.

The working unit 33 operates by receiving power from the electric motor 41 as the power source. Specifically, the hydraulic pump 42 is driven by the electric motor 41, and hydraulic oil is supplied from the hydraulic pump 42 to the hydraulic actuators (hydraulic cylinder 44 and the like) of the working unit 33, so that parts (bucket 331, boom 332, and arm 333) of the working unit 33 operate.

In particular, in the present embodiment, the working unit 33 has an articulated structure in which the boom 332 and the arm 333 are individually rotatable. That is, when each of the boom 332 and the arm 333 rotates about the rotation axis along the horizontal direction, the articulated working unit 33 including the boom 332 and the arm 333 can be extended or folded as a whole, for example.

Similarly to the working unit 33, each of the traveling unit 31 and the turning unit 32 operates by receiving power from the electric motor 41 as the power source. That is, hydraulic oil is supplied from the hydraulic pump 42 to the hydraulic motor 43 of the traveling unit 31, the hydraulic motor of the turning unit 32, and the like, so that the turning unit 32 and the traveling unit 31 operate.

The electric motor 41 is mounted on the turning unit 32 together with the hydraulic pump 42 and the like. The electric motor 41 is driven by the electric power supplied from the secondary battery 50 mounted on the turning unit 32.

Fig. 2 schematically illustrates an electric circuit (electrical connection relationship) and a hydraulic circuit of the working machine 3 according to the present embodiment. In Fig. 2, a power path (an electric path of a heavy current system) is indicated by a solid thick line, an electric signal path (an electric path of a weak current system) is indicated by a solid line, a high-pressure oil path (for hydraulic oil) is indicated by a solid line, and a low-pressure oil path (for pilot oil) is indicated by a dotted line. Moreover, a thick-line arrow between the electric motor 41 and the hydraulic pump 42 indicates a power transmission path.

As illustrated in Fig. 2, the working machine 3 includes, as hydraulic equipment, a remote control valve 45, a direction switching valve (control valve) 46, a pilot pump 47, a control valve 48, and the like, in addition to the hydraulic pump 42, the hydraulic motor 43 (not illustrated in Fig. 2), and the hydraulic cylinder 44. Furthermore, the working machine 3 further includes a cutoff switch 461, a cutoff lever 462, a signal processing circuit 2, the electric motor 41, the secondary battery 50, a charger 51, an inverter 52, and the like.

The hydraulic oil from the hydraulic pump 42 driven by the electric motor 41 is supplied to the hydraulic motor 43 of the traveling unit 31, the hydraulic motor of the turning unit 32, the hydraulic cylinder 44 of the working unit 33, and the like. As a result, hydraulic actuators such as the hydraulic motor 43 and the hydraulic cylinder 44 are driven.

The hydraulic actuator such as the hydraulic cylinder 44 is provided with the direction switching valve 46 of a pilot type capable of switching the direction and flow rate of the hydraulic oil from the hydraulic pump 42. The direction switching valve 46 is driven by being supplied with pilot oil as an input command from the pilot pump 47.

Here, for example, the remote control valve 45 is provided on a supply path of the pilot oil to the direction switching valve 46 corresponding to the hydraulic cylinder 44 of the working unit 33. The remote control valve 45 outputs a work operation command of the working unit 33 according to the operation of the operation device 35 (operation lever). The work operation command instructs an expanding operation, a contracting operation, and the like of the working unit 33.

Similarly, a remote control valve is also provided on a supply path of the pilot oil to the direction switching valve corresponding to the hydraulic motor 43 of the traveling unit 31. The remote control valve outputs a traveling operation command of the traveling unit 31 according to the operation of the operation device 35. The traveling operation command instructs a traveling operation (forward movement, rearward movement, or the like) of the traveling unit 31. Furthermore, a remote control valve is also provided on a supply path of pilot oil to a direction switching valve corresponding to the hydraulic motor of the turning unit 32. The remote control valve outputs a turning operation command of the turning unit 32 according to the operation of the operation device 35. The turning operation command instructs a turning operation (left turning, right turning, or the like) of the turning unit 32.

The control valve 48 includes an electromagnetic control valve (electromagnetic valve), and is inserted between the remote control valve 45 and the pilot pump 47. The control valve 48 is connected to a power supply via the cutoff switch 461, and operates according to a supply current from the power supply. The control valve 48 is herein assumed to be an (electromagnetic) proportional control valve, but is not limited thereto, and may be, for example, an on-off valve capable of switching between opening and cutoff of a flow path.

The control valve 48 opens the flow path of the pilot oil in an energized state, that is, in a state where a current as a control signal is supplied, and cuts off the flow path of the pilot oil in a non-energized state, that is, in a state where the current as the control signal is cut off. Therefore, when the supply current (control signal) to the control valve 48 is cut off, the hydraulic actuator (the hydraulic cylinder 44 or the like) corresponding to the remote control valve 45 cannot be driven, and the hydraulic actuator is forcibly stopped regardless of the operation of the operation device 35.

The cutoff switch 461 is linked to the cutoff lever 462. The cutoff lever 462 is disposed in the driving unit 321 of the machine body 30 and receives an operation input by the user (operator). In the present embodiment, as an example, the cutoff lever 462 can be operated along the up-down direction D1. The cutoff switch 461 is "off" when the cutoff lever 462 is at a "raised position", which is an upper end position of a movable range, and the cutoff switch 461 is "on" when the cutoff lever 462 is at a "lowered position", which is a lower end position of the movable range. Then, the cutoff switch 461 is connected to the control system 1, and on/off of the cutoff switch 461, that is, an operation state of the cutoff lever 462 is monitored by the control system 1. Specifically, the cutoff switch 461 is turned on and off to generate a cutoff signal Si2 (electric signal) and output the signal to the control system 1.

Therefore, when the cutoff lever 462 is at the "lowered position", the control valve 48 is in the energized state, and the hydraulic actuator (hydraulic cylinder 44 or the like) is driven by the operation of the operation device 35. On the other hand, when the cutoff lever 462 is at the "raised position", the control valve 48 is in the non-energized state, and the hydraulic actuator is forcibly stopped regardless of the operation of the operation device 35. Therefore, in order to drive the hydraulic actuator (hydraulic cylinder 44 or the like), the user (operator) needs to operate the cutoff lever 462 to the "lowered position".

Furthermore, since each of the traveling unit 31 and the turning unit 32 also operates when the hydraulic oil is supplied from the hydraulic pump 42 to the hydraulic actuators (hydraulic motor 43 and the like), the traveling unit 31 and the turning unit 32 also cannot be driven when the cutoff lever 462 is at the "raised position". That is, when the cutoff lever 462 is at the "raised position", all of the working unit 33, the traveling unit 31, and the turning unit 32 are forcibly brought into an undrivable state.

In the present embodiment, a state in which the cutoff lever 462 is at the "raised position", that is, a state of the cutoff lever 462 when the working machine 3 cannot be operated is defined as a "locked state". On the other hand, a state in which the cutoff lever 462 is at the "lowered position", that is, a state of the cutoff lever 462 when the working machine 3 can be operated is defined as an "unlocked state".

In short, the cutoff switch 461 is in the "locked state", when turned off, in which the operation of the working machine 3 is restricted (including prohibited), and is in an "unlocked state", when turned on, in which the operation of the working machine 3 is not restricted. Then, when the cutoff lever 462 is at the "raising position" and the cutoff switch 461 is in the locked state (off), the operation of the working machine 3 is forcibly restricted regardless of the operation of the operation device 35. The cutoff lever 462 is a lever that is operated when the operation of the working machine 3 is regulated (for example, locked) in this manner, and has the same meaning as a gate lock lever.

The operation device 35 is disposed in the driving unit 321 of the machine body 30, and is a user interface for receiving an operation input by the user (operator). The operation device 35 includes, for example, an operation lever, and controls the remote control valve 45 according to an operation amount with respect to the operation lever. As a result, the operator can actuate the remote control valve 45 by operating the operation device 35, instruct the direction and flow rate of the hydraulic oil from the hydraulic pump 42, and operate the working machine 3.

The activation switch 36 is disposed in the driving unit 321 of the machine body 30, and is operated by the user (operator) at the time of activating the working machine 3. The machine body 30 (including the traveling unit 31, the turning unit 32, and the working unit 33) does not operate according to the operation of the operation device 35 while the activation switch 36 is off, and only after the activation switch 36 is turned on, the machine body 30 operates according to the operation of the operation device 35. In the present embodiment, as an example, the activation switch 36 is linked to a key cylinder, and is turned on by performing an activation operation of the electric motor 41 using a key. By the operation (activation operation), the activation switch 36 generates an activation signal Si3 (electric signal) and outputs the activation signal Si3 to the control system 1.

The charging stop switch 37 is a switch operated by the user (operator) for stopping charging of the secondary battery 50. When the charging stop switch 37 is operated while the charger 51 is charging the secondary battery 50, the charging of the secondary battery 50 is forcibly stopped regardless of whether the charging of the secondary battery 50 is completed. The charging stop switch 37 is disposed, for example, in the driving unit 321 of the machine body 30. By the operation (charging stop operation), the charging stop switch 37 generates a charging stop signal Si4 (electric signal) and outputs the charging stop signal Si4 to the control system 1.

The electric motor 41 is an AC motor driven by AC power supplied from the inverter 52. The inverter 52 is electrically connected to the secondary battery 50, and converts a DC voltage, which is an output voltage of the secondary battery 50, into an AC voltage. An output terminal of the inverter 52 is electrically connected to the electric motor 41. Therefore, the inverter 52 converts the DC voltage, applied from the secondary battery 50, into the AC voltage and outputs the AC voltage to the electric motor 41, so that three-phase AC is supplied to the electric motor 41, and the electric motor 41 that is the AC motor is driven. The inverter 52 is controlled by a control signal from the control system 1, and executes a power conversion operation of converting DC power into AC power according to the control signal.

The secondary battery 50 is an example of a "power supply" that supplies DC power to the inverter 52 and the like. The secondary battery 50 is a chargeable/dischargeable power storage device (storage battery), and is, for example, a lithium ion battery in the present embodiment. In the present embodiment, the secondary battery 50 is mounted on the working machine 3 in a replaceable manner, but it is not essential that the secondary battery 50 is replaceable.

An input terminal of the charger 51 can be electrically connected to an external power supply AC1 via a connection device 53. An output terminal of the charger 51 is electrically connected to the secondary battery 50. In the present embodiment, as an example, the external power supply AC1 is an AC power supply such as a commercial power supply, and is not included in components of the working machine 3. The connection device 53 is a device that includes a connector 531 of a power supply cable C1 electrically connected to the external power supply AC1 and a power supply port 532 electrically connected to the charger 51, and detachably connects (the connector 531 of) the power supply cable C1 to the power supply port 532. Specifically, the power supply port 532 is a connector connected to the charger 51 via a cable, and the charger 51 is electrically connected to the external power supply AC1 by being connected to the connector 531 of the power supply cable C1.

As a result, in a state in which (the connector 531 of) the power supply cable C1 is connected to the power supply port 532, the charger 51 converts an AC voltage supplied from the external power supply AC1 into a DC voltage and applies the DC voltage to the secondary battery 50 to charge the secondary battery 50. The charger 51 is controlled by a control signal from the control system 1, and executes a power conversion operation of converting AC power into DC power according to the control signal. Moreover, the charger 51 has a remaining capacity monitoring function of monitoring the remaining capacity of the secondary battery 50, and outputs a remaining capacity signal related to the remaining capacity of the secondary battery 50 to the control system 1.

Here, the working machine 3 has a function of detecting a connection state of the external power supply AC1 to the charger 51 (that is, presence or absence of the power supply from the external power supply AC1). In the present embodiment, as an example, the detection function is mounted on the power supply port 532, and the connection state of the external power supply AC1 to the charger 51 is detected based on a connection state of (the connector 531 of) the power supply cable C1 to the power supply port 532. By the detection function, the connection device 53 generates a connection detection signal Si1 (electric signal) indicating a detection result and outputs the connection detection signal Si1 to the control system 1 in the present embodiment.

In the secondary battery 50, a temperature range suitable for charging and/or discharging is determined as an operating temperature range. Therefore, the working machine 3 includes a cooling device, a heater, a temperature sensor, and the like as devices related to temperature management of the secondary battery 50. The cooling device is a device for cooling the secondary battery 50, and the heater is a device for heating the secondary battery 50.

Meanwhile, the signal processing circuit 2 is inserted between the activation switch 36 and the control system **1,** that is, in an input path of the activation signal Si3 with respect to the control system 1. The connection detection signal Si1 and the cutoff signal Si2 are input to the signal processing circuit 2. The signal processing circuit 2 includes an OR circuit 21 and a relay 22.

The OR circuit 21 is a circuit that outputs a logical sum of two input signals. Here, the connection detection signal Si1 and the cutoff signal Si2 are input to the OR circuit 21, and the OR circuit 21 outputs a logical sum of the connection detection signal Si1 and the cutoff signal Si2. That is, when both the connection detection signal Si1 and the cutoff signal Si2 are at the low (L) level, an output of the OR circuit 21 is at the L level, and when at least one of the connection detection signal Si1 and the cutoff signal Si2 is at the high (H) level, an output of the OR circuit 21 is at the H level.

The relay 22 is, for example, an electromagnetic relay. Here, a coil of the relay 22 is electrically connected between an output terminal of the OR circuit 21 and a circuit ground. Therefore, the coil of the relay 22 is driven if the output of the OR circuit 21 is at the H level. A contact of the relay 22 is inserted between the activation switch 36 and the control system 1. Therefore, when the contact of the relay 22 is on (in a conductive state), the input path of the activation signal Si3 between the activation switch 36 and the control system 1 is conductive. On the other hand, when the contact of the relay 22 is off (in a cutoff state), the input path of the activation signal Si3 between the activation switch 36 and the control system 1 is cut off. In the present embodiment, as an example, the relay 22 is a "b-contact relay" in which the contact is off when the coil is energized.

The control system 1 mainly includes, for example, a computer system including one or more processors such as a central processing unit (CPU) and one or more memories such as a read only memory (ROM) and a random access memory (RAM), and executes various types of processing (information processing). In the present embodiment, the control system 1 is an integrated controller that controls the entire working machine 3, and includes, for example, an electronic control unit (ECU). However, the control system 1 may be provided separately from the integrated controller, or may mainly include one processor or a plurality of processors.

Here, the signal processing circuit 2 is a part of the control system 1. The control system 1 will be described in detail in the section of "[2] Configuration of control system".

Moreover, in addition to the above-described configuration, the machine body 30 further includes the drive device, a communication terminal, and the like. The drive device is a device for supplying power to the attachment of the working unit 33, and includes a device (mechanism) such as a power take-off (PTO) for extracting power from the electric motor 41 as power for driving the attachment including hydraulic equipment. Furthermore, the machine body 30 is provided with various sensors (including a camera) for detecting a detection target object in a monitoring area around the working machine 3, such as a camera for imaging the periphery of the machine body 30.

### [2] Configuration of control system

Next, the configuration of the control system 1 according to the present embodiment will be described with reference to Fig. 2. The control system 1 controls each unit (the charger 51, the inverter 52, the connection device 53, and the like) of the machine body 30 of the working machine 3. The control system 1 is a component of the working machine 3, and constitutes the working machine 3 together with the machine body 30 and the like. In other words, the working machine 3 according to the present embodiment includes at least the control system 1 and the machine body 30 (including the traveling unit 31, the turning unit 32, and the working unit 33) on which the secondary battery 50 and the electric motor 41 are mounted.

The control system 1 is used for control of the working machine 3, and includes an acquisition processing unit 11, an activation processing unit 12, and a regulation processing unit 13 as illustrated in Fig. 2. In the present embodiment, as an example, since the control system 1 mainly includes the computer system including one or more processors, the plurality of functional units (the acquisition processing unit **11** and the like) are achieved by the one or more processors executing a working machine control program. The plurality of functional units included in the control system 1 may be provided in a plurality of housings in a distributed manner, or may be provided in one housing.

The control system 1 is configured to be able to communicate with a device provided in each unit of the machine body 30. That is, at least the activation switch 36, the charging stop switch 37, the cutoff switch 461, the control valve 48, the charger 51, the inverter 52, the connection device 53, and the like are connected to the control system 1. As a result, the control system 1 can control the charger 51, the inverter 52, and the like, and can acquire the activation signal Si3 from the activation switch 36, the charging stop signal Si4 from the charging stop switch 37, the connection detection signal Si1 from the connection device 53, the remaining capacity signal from the charger 51, or the like. Here, the control system 1 may directly exchange various types of information (data) with each device or indirectly exchange various types of information (data) via a repeater or the like.

The acquisition processing unit 11 executes acquisition processing of regularly or irregularly acquiring various data including the activation signal Si3 from the activation switch 36, the charging stop signal Si4 from the charging stop switch 37, the connection detection signal Si1 from the connection device 53, the remaining capacity signal from the charger 51, and the like from the machine body 30. That is, the acquisition processing unit 11 acquires detection results (detection values) of various sensors (including a switch and a detection function) including data such as an activation operation of the electric motor 41 and a connection state of the external power supply AC1 to the charger 51. In the present embodiment, the acquisition processing unit 11 also acquires data indicating the temperature of the hydraulic oil (hydraulic oil temperature) and the like from the machine body 30. The data acquired by the acquisition processing unit 11 is stored in, for example, a memory or the like.

The activation processing unit 12 executes activation processing of activating the electric motor 41 by the activation operation. The activation processing unit 12 basically activates the electric motor 41 when the activation operation of the electric motor 41 is performed using the key and the acquisition processing unit **11** receives the activation signal Si3 from the activation switch 36. Here, the activation processing unit 12 activates the electric motor 41 by controlling the inverter 52 in a state in which the electric motor 41 is stopped.

The regulation processing unit 13 executes regulation processing of regulating the activation of the electric motor 41 without depending on the activation operation when activation conditions are not satisfied. That is, the activation processing unit 12 basically activates the electric motor 41 when the activation operation of the electric motor 41 is performed, but the regulation processing unit 13 regulates the activation of the electric motor 41 when the activation conditions are not satisfied as an exception. As used herein, "regulating" means restricting things, and includes not only completely prohibiting, but also imposing any restriction in general. The regulation processing unit 13 may "regulate" the activation of the electric motor 41, and may regulate the activation of the electric motor 41 by activating the electric motor 41 after setting an upper limit of the rotation speed of the electric motor 41. In the present embodiment, as an example, the regulation processing unit 13 regulates the activation of the electric motor 41 by prohibiting the activation of the electric motor 41.

As described above, the electric motor 41 is not always activated when the activation operation of the electric motor 41 is performed in the present embodiment, and the activation of the electric motor 41 may be regulated (including "prohibited"). In a case where the activation conditions are satisfied, the electric motor 41 is activated when the activation operation of the electric motor 41 is performed. In a case where the activation conditions are not satisfied, even when the activation operation of the electric motor 41 is performed, the activation of the electric motor 41 is regulated (prohibited in the present embodiment), and the electric motor 41 is not activated.

In addition to the above configuration, the control system 1 includes a charging processing unit that controls the charger 51 to charge the secondary battery 50, a control processing unit that controls the machine body 30 according to the operation of the operation lever or the like, a storage unit, and the like.

### [3] Control method of working machine

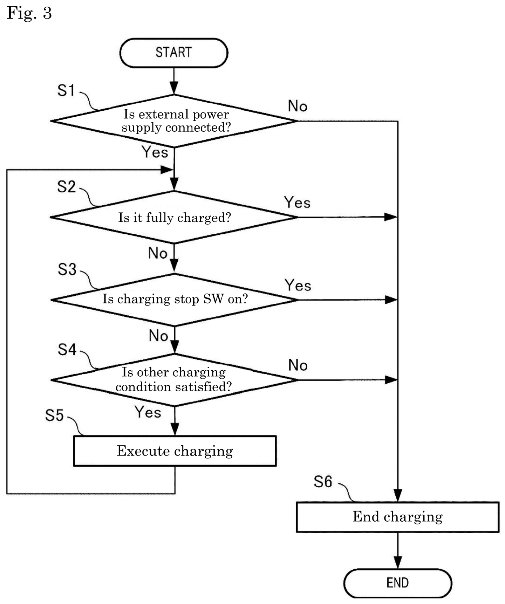

Hereinafter, an example of a control method of the working machine 3 (hereinafter, simply referred to as a "control method") mainly executed by the control system 1 will be described with reference to Figs. 3 to 5.

The control method according to the present embodiment is executed by the control system 1 mainly including the computer system; in other words, the control method is embodied by the working machine control program (hereinafter, simply referred to as a "control program"). That is, the control program according to the present embodiment is a computer program for causing one or more processors to execute each type of processing related to the control method. Such a control program may be executed by, for example, the control system 1 and a display device in cooperation with each other.

Here, when a specific start operation set in advance for executing the control program is performed, the control system 1 executes the following various types of processing related to the control method. The start operation is, for example, an operation of starting the working machine 3, that is, an operation of turning on a main switch or the like. On the other hand, when a specific end operation set in advance is performed, the control system 1 ends the following various types of processing related to the control method. The end operation is, for example, an operation of stopping the working machine 3, that is, an operation of turning off the main switch or the like.

### [3.1] Charging operation

First, in the control method according to the present embodiment, particularly, an operation (charging operation) related to charging of the secondary battery 50 will be described in detail.

In the present embodiment, when (the connector 531 of) the power supply cable C1 is connected to the power supply port 532, the working machine 3 is brought into a state in which electric power can be supplied from the external power supply AC1 to the charger 51 as described above. In this state, when the secondary battery 50 is not in a fully charged state and charging conditions such as the temperature of the secondary battery 50 being in the operating temperature range are satisfied, the control system 1 controls the charger 51 to charge the secondary battery 50 (enters a "charging mode"). Then, when the secondary battery 50 is in the fully charged state, the charging conditions are not satisfied, so that the control system 1 controls the charger 51 to end the charging of the secondary battery 50. In the present embodiment, in a state in which (the connector 531 of) the power supply cable C1 is connected to the power supply port 532, the operation of the machine body 30 (including the traveling unit 31, the turning unit 32, and the working unit 33) of the working machine 3 is prohibited.

The "charging conditions" in the present disclosure are conditions related to the state of charge of the secondary battery 50, and include, for example, a condition related to a connection state of the external power supply AC1 to the charger 51, a charging rate of the secondary battery 50, the temperature of the secondary battery 50, and the like. Only when the charging conditions are satisfied, the control system 1 can control the charger 51 to charge the secondary battery 50. That is, if the charging conditions are not satisfied, the secondary battery 50 cannot be charged.

In the present embodiment, as an example, the charging conditions include that the charger 51 is electrically connected to the external power supply AC1, that the secondary battery 50 is not in the fully charged state, and that the temperature of the secondary battery 50 is within the operating temperature range. The control system 1 can charge the secondary battery 50 only when all of the plurality of (here, three) charging conditions are satisfied. The charging conditions are not limited thereto, and may include, for example, that the power supply port 532 is open, that power is actually supplied from the external power supply AC1 to the charger 51, and the like.

Moreover, when a specific charging stop operation set in advance is performed during charging of the secondary battery 50, the charging is stopped even if the secondary battery 50 has not reached the fully charged state. When such a charging stop operation is performed while the connection between the power supply port 532 and (the connector 531 of) the power supply cable C1 is locked during the charging of the secondary battery 50, the lock is released, and the connection between the power supply port 532 and (the connector 531 of) the power supply cable C1 can be released. Here, as an example, the charging stop operation is assumed to be an operation of pressing the charging stop switch 37 (which may be a physical switch or a virtual switch displayed on a display device).

Fig. 3 is a flowchart illustrating an example of processing related to the charging operation.

As illustrated in Fig. 3, the control system 1 first determines whether the charger 51 is electrically connected to the external power supply AC1 (S1). When the connection detection signal Si1 acquired by the acquisition processing unit 11 from the connection device 53 indicates that (the connector 531 of) the power supply cable C1 and the power supply port 532 are "connected", the control system 1 determines that the charger 51 is connected to the external power supply AC1 (S1: Yes), and causes the processing to proceed to step S2. On the other hand, when the connection detection signal Si1 indicates that (the connector 531 of) the power supply cable C1 and the power supply port 532 are "disconnected", the control system 1 determines that the charger 51 is not connected to the external power supply AC1 (S1: No), and causes the processing to proceed to step S6 to end the charging.

In step S2, the control system 1 determines whether the secondary battery 50 is in the fully charged state. When it is determined that the secondary battery 50 is in the fully charged state based on the remaining capacity signal acquired by the acquisition processing unit 11 from the charger 51 (S2: Yes), the control system 1 causes the processing to proceed to step S6 to end the charging. On the other hand, when it is determined that the secondary battery 50 is not in the fully charged state based on the remaining capacity signal (S2: No), the control system 1 causes the processing to proceed to step S3.

In step S3, the control system 1 determines whether the charging stop operation has been performed. When the charging stop switch 37 is pressed, the control system 1 determines that the charging stop operation has been performed (S3: Yes), and causes the processing to proceed to step S6 to end the charging. On the other hand, when the charging stop switch 37 is not pressed, the control system 1 determines that the charging stop operation has not been performed (S3: No), and causes the processing to proceed to step S4.

In step S4, the control system 1 determines whether the other charging condition is satisfied. In the present embodiment, the charging conditions include that the temperature of the secondary battery 50 is within the operating temperature range in addition to that the charger 51 is electrically connected to the external power supply AC1 (S1: Yes) and that the secondary battery 50 is not in the fully charged state (S2: No). Therefore, in step S4, the control system 1 determines whether at least the temperature of the secondary battery 50 is within the operating temperature range as the other charging condition.

When it is determined that the temperature of the secondary battery 50 is within the operating temperature range, that is, when the other charging condition is satisfied, based on a temperature signal acquired by the acquisition processing unit 11 from the temperature sensor (S4: Yes), the control system 1 causes the processing to proceed to step S5 to execute charging. On the other hand, when it is determined that the temperature of the secondary battery 50 is not within the operating temperature range, that is, when the other charging condition is not satisfied based on the temperature signal (S4: No), the control system 1 causes the processing to proceed to step S6 to end the charging.

In step S5, the control system 1 actuates the charger 51 to charge the secondary battery 50. In step S6, the control system 1 controls the charger 51 to end the charging of the secondary battery 50, and ends the series of processing.

In short, when all the charging conditions that the charger 51 is electrically connected to the external power supply AC1 (S1: Yes), that the secondary battery 50 is not in the fully charged state (S2: No), and that the temperature of the secondary battery 50 is within the operating temperature range (S4: Yes) are satisfied, the control system 1 executes charging of the secondary battery 50 (S5). On the other hand, when any one of these charging conditions is not satisfied, the control system 1 does not charge the secondary battery 50 (S6).

The control system 1 repeatedly executes the processing of steps S1 to S6. However, the flowchart illustrated in Fig. 3 is merely an example, and processing may be added or omitted as appropriate, or the order of processing may be changed as appropriate.

### [3.2] Activation operation

First, in the control method according to the present embodiment, particularly, an operation (activation operation) related to activation of the electric motor 41 will be described in detail.

In the present embodiment, the activation processing unit 12 of the control system 1 activates the electric motor 41 by the activation operation when the activation conditions are satisfied as described above. The activation operation is an operation of turning on the activation switch 36 linked to the key cylinder.

When the electric motor 41 is activated, the hydraulic pump 42 is driven by the electric motor 41, and thus, hydraulic oil is supplied from the hydraulic pump 42 to the hydraulic actuators (including the hydraulic motor 43, the hydraulic cylinder 44, and the like) of each unit of the machine body 30 to make the machine body 30 operable. On the other hand, when the activation conditions are not satisfied, the regulation processing unit 13 of the control system 1 regulates (in the present embodiment, prohibits) the activation of the electric motor 41 without depending on the activation operation of the electric motor 41.

The "activation condition" in the present disclosure is a condition necessary for activating the electric motor 41. The control system 1 can activate the electric motor 41 by controlling the inverter 52 only when the activation conditions are satisfied. That is, the electric motor 41 cannot be activated unless the activation conditions are satisfied.

In the present embodiment, as an example, the activation conditions include a first condition related to the state of charge of the secondary battery 50 and a second condition related to a lock operation for regulating the operation of the working machine 3. The "first condition" mentioned here is a condition related to the state of charge of the secondary battery 50, and includes, as an example, that (the connector 531 of) the power supply cable C1 and the power supply port 532 are "disconnected" in the present embodiment. The "second condition" mentioned here is a condition related to the lock operation, and includes, as an example, that the cutoff lever 462 is at the "raised position" in the present embodiment.

That is, in the present embodiment, the activation conditions include that (the power supply port 532 of) the working machine 3 is not connected to the external power supply AC1 (the first condition) and that the cutoff lever 462 is at the "raised position" (the second condition). The control system 1 can activate the electric motor 41 only when both the first condition and the second condition are satisfied. The activation conditions are not limited thereto, and may include, for example, that the operator is on the driving unit 321, that a detection target object (for example, "person") does not exist around the machine body 30, and the like.

In short, the control method according to the present embodiment includes activating the electric motor 41 by the activation operation, and regulating the activation of the electric motor 41 without depending on the activation operation when the activation conditions are not satisfied. Here, the activation conditions include the first condition related to the state of charge of the secondary battery 50. That is, since the activation conditions are not satisfied in a state in which the first condition is not satisfied, even if the activation switch 36 is turned on (the activation operation is performed), the activation of the electric motor 41 is regulated (prohibited).

That is, the electric motor 41 is not unconditionally activated when the activation operation is performed, but the activation of the electric motor 41 can be regulated even when the activation operation is performed unless the activation conditions are satisfied. Therefore, the activation of the electric motor 41 can be regulated, for example, in a case where the operator operates the working machine 3 while forgetting to remove (the connector 531 of) the power supply cable C1 from the power supply port 532 after the charging of the secondary battery 50 is completed in the charging mode. As a result, for example, it is possible to prevent the working machine 3 from operating in a state in which the power supply cable C1 is still connected to the power supply port 532, and damage to parts such as the power supply cable C1 is less likely to occur.

As a result, it is possible to provide the control method of the working machine 3, the working machine control program, the control system 1, and the working machine 3 that easily prevent the damage to the parts.

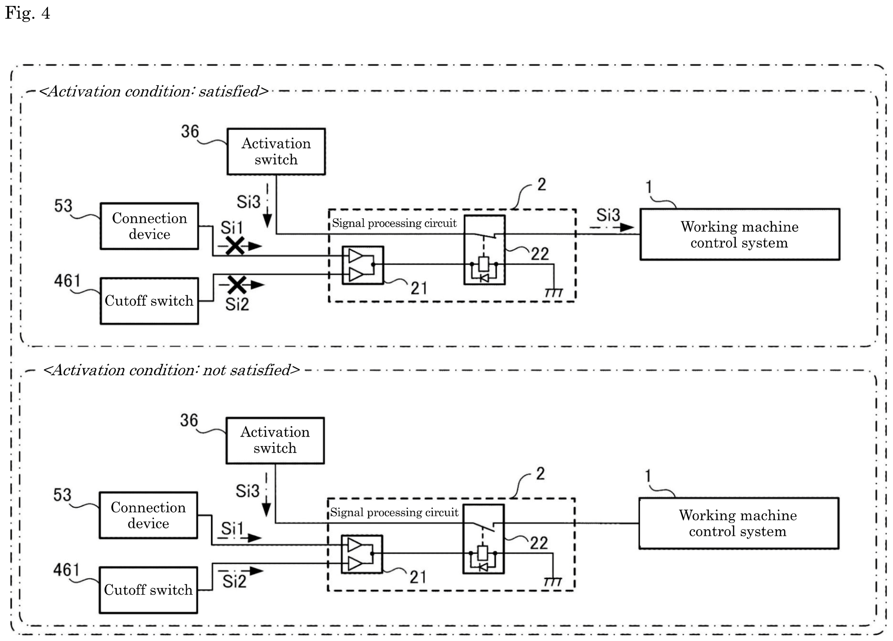

More specifically, in the control system 1 according to the present embodiment, the relay 22 of the signal processing circuit 2 is switched between a case where the activation conditions are satisfied and a case where the activation conditions are not satisfied as illustrated in Fig. 4.

In the present embodiment, when the first condition is satisfied, that is, when (the connector 531 of) the power supply cable C1 is not connected to the power supply port 532, the connection detection signal Si1 from the connection device 53 is at the L level. When the first condition is not satisfied, that is, when (the connector 531 of) the power supply cable C1 is connected to the power supply port 532, the connection detection signal Si1 from the connection device 53 is at the H level. Similarly, in the present embodiment, when the second condition is satisfied, that is, when the cutoff lever 462 is at the "raised position", the cutoff signal Si2 from the cutoff switch 461 is at the L level. When the second condition is not satisfied, that is, when the cutoff lever 462 is at the "lowered position", the cutoff signal Si2 from the cutoff switch 461 is at the H level.

That is, when both the first condition and the second condition included in the activation conditions are satisfied, both the connection detection signal Si1 and the cutoff signal Si2 input to the OR circuit 21 of the signal processing circuit 2 are at the L level. Therefore, the output of the OR circuit 21 is at the L level, the contact of the relay 22 is on (in the conductive state), and the input path of the activation signal Si3 between the activation switch 36 and the control system 1 is conductive.

Therefore, when the activation switch 36 is turned on (the activation operation is performed) in a case where the activation conditions are satisfied, the activation signal Si3 is input to the control system 1 through the signal processing circuit 2. As a result, the control system 1 activates the electric motor 41 in response to the activation operation.

On the other hand, when at least one of the first condition and the second condition included in the activation conditions is not satisfied, at least one of the connection detection signal Si1 and the cutoff signal Si2 input to the OR circuit 21 of the signal processing circuit 2 becomes the H level. Therefore, the output of the OR circuit 21 becomes the H level, the contact of the relay 22 is off (in the cutoff state), and the input path of the activation signal Si3 between the activation switch 36 and the control system 1 is cut off.

Therefore, in a case where the activation conditions are not satisfied, when the activation switch 36 is turned on (the activation operation is performed), the activation signal Si3 is cut off in the signal processing circuit 2. As a result, the activation of the electric motor 41 is regulated (prohibited) without depending on the activation operation.

As described above, the secondary battery 50 is charged in a state in which the working machine 3 is electrically connected to the external power supply AC1 in the control method according to the present embodiment. The first condition includes that the working machine 3 is not connected to the external power supply AC1.

As a result, for example, even if the operator tries operating the working machine 3 while forgetting to remove the power supply cable C1 from the power supply port 532 after the charging of the secondary battery 50 is completed in the charging mode, since the first condition is not satisfied, the activation of the electric motor 41 is regulated. Thus, for example, it is possible to prevent the working machine 3 from operating in a state in which the power supply cable C1 is still connected to the power supply port 532, and damage to parts such as the power supply cable C1 is less likely to occur.

Moreover, in the control method according to the present embodiment, the electric motor 41 is activated when the activation signal Si3 is input to a control device (the control system 1) that controls the electric motor 41 in response to the activation operation. When at least the first condition is not satisfied, the activation of the electric motor 41 is regulated by not inputting the activation signal Si3 to the control device (the control system 1) even if the activation operation is performed. As a result, when the first condition is not satisfied, there is no input of the activation signal Si3 to the control device (the control system 1) that controls the electric motor 41, so that the activation of the electric motor 41 can be regulated even if the activation operation is performed.

Furthermore, in the present embodiment, even if the activation operation is performed, the activation signal Si3 is not input to the control device (the control system 1) by the relay 22 connected to the input path of the activation signal Si3 to the control device (the control system 1). As a result, since the activation signal Si3 can be cut off by the control of the relay 22, the input of the activation signal Si3 to the control device (the control system 1) can be eliminated although the activation signal Si3 is generated in response to the activation operation.

Moreover, in the present embodiment, the electric motor 41 is activated when the activation signal Si3 is input to the control device (the control system 1) that controls the electric motor 41 in response to the activation operation. At least the first condition is determined after the activation operation is performed and before the activation signal Si3 is input to the control device (the control system 1).

Specifically, in the signal processing circuit 2 provided on the input path of the activation signal Si3 to the control device (the control system 1), whether the first condition is satisfied is determined (by the OR circuit 21) based on the connection detection signal Si1 from the connection device 53. Therefore, whether the activation signal Si3 is input to the control device (the control system 1) is determined by the connection detection signal Si1 at the time when the activation operation is performed and the activation signal Si3 is input. As a result, it is possible to determine whether to regulate (prohibit) the activation of the electric motor 41 according to the situation at the time when the activation operation is performed.

In the control method according to the present embodiment, the activation conditions include the second condition related to the lock operation for regulating the operation of the working machine 3. That is, the activation conditions include the first condition and the second condition. When at least one of the first condition and the second condition included in the activation conditions is not satisfied, the activation of the electric motor 41 is regulated (prohibited) even if the activation switch 36 is turned on (the activation operation is performed).

As a result, for example, in a state in which the operation of the working machine 3 is not regulated by the lock operation, the activation of the electric motor 41 can be regulated, and for example, it is possible to prevent the working machine 3 from operating in a state in which the power supply cable C1 is still connected to the power supply port 532, and the parts such as the power supply cable C1 are less likely to be damaged.

Here, the determination of the first condition and the determination of the second condition out of the activation conditions are performed by the same method. In the present embodiment, both the connection detection signal Si1 related to the first condition and the cutoff signal Si2 related to the second condition are used as the inputs to the OR circuit 21 of the signal processing circuit 2. Therefore, both the first condition and the second condition can be determined by the same method based on the H/L level of the signal in the signal processing circuit 2. This makes it easy to simplify the configuration for determining the first condition and the second condition.

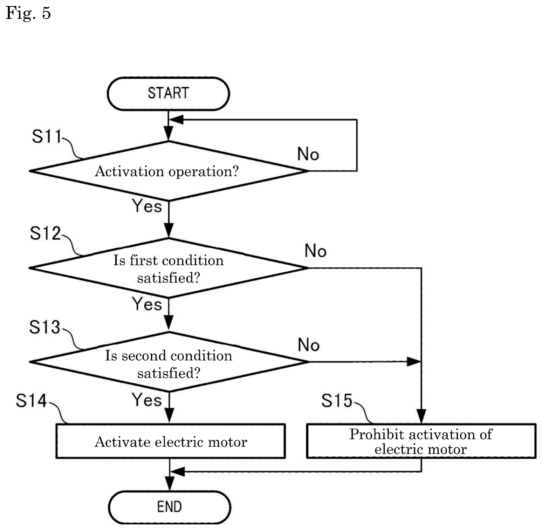

Fig. 5 is a flowchart illustrating an example of processing related to the activation operation.

As illustrated in Fig. 5, first, the presence or absence of the activation operation is determined (S11). When the activation operation is performed (S11: Yes), the activation signal is output from the activation switch 36.

In steps S12 and S13, the signal processing circuit 2 of the control system 1 determines whether the first condition is satisfied and whether the second condition is satisfied. When the connection detection signal Si1 input to the OR circuit 21 of the signal processing circuit 2 is at the L level, it is determined that the first condition is not satisfied (S12: No), and the control system 1 causes the processing to proceed to step S15. When the connection detection signal Si1 input to the OR circuit 21 of the signal processing circuit 2 is at the H level, it is determined that the first condition is satisfied (S12: Yes), and the control system 1 causes the processing to proceed to step S13.

When the cutoff signal Si2 input to the OR circuit 21 of the signal processing circuit 2 is at the L level, it is determined that the second condition is not satisfied (S13: No), and the control system 1 causes the processing to proceed to step S15. When the cutoff signal Si2 input to the OR circuit 21 of the signal processing circuit 2 is at the H level, it is determined that the second condition is satisfied (S13: Yes), and the control system 1 causes the processing to proceed to step S14.

In step S14, the activation processing unit 12 of the control system 1 controls the inverter 52 to activate the electric motor 41. In step S15, the regulation processing unit 13 of the control system 1 regulates (prohibits) the activation of the electric motor 41.

In short, when both the conditions that (the connector 531 of) the power supply cable C1 is not connected to the power supply port 532 (S12: Yes) and that the cutoff lever 462 is at the "raised position" (S13: Yes) are satisfied, in response to the activation operation (S11: Yes), the control system 1 activates the electric motor 41 (S14). On the other hand, when any one of the activation conditions is not satisfied, the control system 1 does not activate the electric motor 41 even if the activation operation (S11: Yes) is performed (S15).

The control system 1 repeatedly executes the processing of steps S11 to S15. However, the flowchart illustrated in Fig. 5 is merely an example, and processing may be added or omitted as appropriate, or the order of processing may be changed as appropriate.

### [4] Modifications

Modifications of the first embodiment will be described one by one below. The modifications described below can be applied in combination as appropriate.

The control system 1 in the present disclosure includes a computer system. The computer system mainly includes one or more processors and one or more memories as hardware. The processor executes a program recorded in the memory of the computer system to achieve a function as the control system 1 in the present disclosure. The program may be recorded in advance in the memory of the computer system, may be provided through a telecommunication line, or may be recorded and provided in a non-transitory recording medium, such as a memory card, an optical disk, or a hard disk drive, that is readable by the computer system. Moreover, some or all of the functional units included in the control system 1 may include an electronic circuit.

Moreover, it is not essential for the control system 1 that at least some functions of the control system 1 are integrated in one housing, and the components of the control system 1 may be provided in a plurality of housings in a distributed manner. Conversely, in the first embodiment, the functions distributed over a plurality of devices may converge into one housing. Furthermore, at least some functions of the control system 1 may be achieved by a cloud (cloud computing) or the like.

The power source of the working machine 3 is not limited to the electric motor 41. The working machine 3 may be, for example, a hybrid working machine having a drive mechanism that includes a plurality of power sources including the electric motor 41 and an engine (internal combustion engine) which generates power by combustion of fuel. In this case, the electric motor 41 and the engine are individually driven to generate power. Here, the power generated by the electric motor 41 and the power generated by the engine can be synthesized by a power transmission unit, and for example, the electric motor 41 can assist the engine so that more power can be generated as compared with a case where the engine is used alone. Furthermore, the power source of the working machine 3 may not include the electric motor 41. In this case, the electric power of the secondary battery 50 is used by an electric load (an air conditioner, a lighting device, or the like) other than the electric motor 41 mounted on the working machine 3.

The determination of the first condition and the determination of the second condition out of the activation conditions may be performed by different methods. For example, the determination of the first condition is performed by the signal processing circuit 2, whereas the determination of the second condition may be performed by software in the regulation processing unit 13 of the control system 1. Conversely, the determination of the second condition is performed by the signal processing circuit 2, whereas the determination of the first condition may be performed by software in the regulation processing unit 13 of the control system 1. As described above, when the determination of the first condition and the determination of the second condition are performed by different methods, the determination can be performed by a method suitable for each condition.

Moreover, regulating the activation of the electric motor 41 without depending on the activation operation when the activation conditions are not satisfied is not limited to cutting off the activation signal Si3 input to the control system 1 (not receiving the activation signal Si3). For example, although the acquisition processing unit 11 of the control system 1 acquires the activation signal Si3, the activation of the electric motor 41 may be regulated without depending on the activation operation when the regulation processing unit 13 does not activate the electric motor 41.

The control method of the working machine 3 can be applied to various vehicles, ships, flying objects, and the like without being limited to the working machine 3.

### [Additional Notes of Invention]

Hereinafter, an outline of the invention extracted from the above-described embodiment will be additionally described. Note that configurations and processing functions described in the following additional Notes can be selected to be combined as desired.

### <Additional Note 1>

A control method of a working machine that includes a secondary battery and an electric motor driven by electric power of the secondary battery, the control method including:
activating the electric motor by an activation operation; and
regulating the activation of the electric motor without depending on the activation operation when activation conditions are not satisfied,
in which the activation conditions include a first condition related to a state of charge of the secondary battery.

### <Additional Note 2>

The control method of the working machine according to Additional Note 1, in which
the secondary battery is charged in a state in which the working machine is electrically connected to an external power supply, and
the first condition includes that the working machine is not connected to the external power supply.

### <Additional Note 3>

The control method of the working machine according to Additional Note 1 or 2, in which
the electric motor is activated when an activation signal is input to a control device configured to control the electric motor in response to the activation operation, and
the activation of the electric motor is regulated by not inputting the activation signal to the control device even if the activation operation is performed in a case where at least the first condition is not satisfied.

### <Additional Note 4>

The control method of the working machine according to Additional Note 3, further including causing a relay, connected to an input path of the activation signal to the control device, to bring a state in which the activation signal is not input to the control device even if the activation operation is performed.

### <Additional Note 5>

The control method of the working machine according to any one of Additional Notes 1 to 4, in which
the electric motor is activated when an activation signal is input to a control device configured to control the electric motor in response to the activation operation, and
at least the first condition is determined after the activation operation is performed and before the activation signal is input to the control device.

### <Additional Note 6>

The control method of the working machine according to any one of Additional Notes 1 to 5, in which
the activation conditions include a second condition related to a lock operation for regulating operation of the working machine.

### <Additional Note 7>

The control method of the working machine according to Additional Note 6, in which
determination of the first condition and determination of the second condition out of the activation conditions are performed by an identical method.

### <Additional Note 8>

The control method of the working machine according to Additional Note 6, in which
determination of the first condition and determination of the second condition out of the activation conditions are performed by different methods.

### <Additional Note 9>

A working machine control program for causing one or more processors to execute:
the control method of the working machine according to any one of Additional Notes 1 to 8.

### LIST OF REFERENCE SIGNS

- 1: Working machine control system (control device)
- 3: Working machine
- 12: Activation processing unit
- 13: Regulation processing unit
- 22: Relay
- 30: Machine body
- 41: Electric motor
- 50: Secondary battery
- AC1: External power supply
- Si3: Activation signal

## Claims

1. A control method of a working machine that includes a secondary battery and an electric motor driven by electric power of the secondary battery, the control method comprising:
activating the electric motor by an activation operation; and
regulating the activation of the electric motor without depending on the activation operation when activation conditions are not satisfied,
wherein the activation conditions include a first condition related to a state of charge of the secondary battery.

2. The control method of the working machine according to claim 1, wherein
the secondary battery is charged in a state in which the working machine is electrically connected to an external power supply, and
the first condition includes that the working machine is not connected to the external power supply.

3. The control method of the working machine according to claim 1 or 2, wherein
the electric motor is activated when an activation signal is input to a control device configured to control the electric motor in response to the activation operation, and
the activation of the electric motor is regulated by not inputting the activation signal to the control device even if the activation operation is performed in a case where at least the first condition is not satisfied.

4. The control method of the working machine according to claim 3, further comprising causing a relay, connected to an input path of the activation signal to the control device, to bring a state in which the activation signal is not input to the control device even if the activation operation is performed.

5. The control method of the working machine according to claim 1 or 2, wherein
the electric motor is activated when an activation signal is input to a control device configured to control the electric motor in response to the activation operation, and
at least the first condition is determined after the activation operation is performed and before the activation signal is input to the control device.

6. The control method of the working machine according to claim 1 or 2, wherein
the activation conditions include a second condition related to a lock operation for regulating operation of the working machine.

7. The control method of the working machine according to claim 6, wherein
determination of the first condition and determination of the second condition out of the activation conditions are performed by an identical method.

8. The control method of the working machine according to claim 6, wherein
determination of the first condition and determination of the second condition out of the activation conditions are performed by different methods.

9. A working machine control program for causing one or more processors to execute:
the control method of the working machine according to claim 1 or 2.

10. A working machine control system used in a working machine that includes a secondary battery and an electric motor driven by electric power of the secondary battery, the working machine control system comprising:
an activation processing unit configured to activate the electric motor by an activation operation; and
a regulation processing unit configured to regulate the activation of the electric motor without depending on the activation operation when activation conditions are not satisfied,
wherein the activation conditions include a first condition related to a state of charge of the secondary battery.

11. A working machine comprising:
the working machine control system according to claim 10; and
a machine body on which the secondary battery and the electric motor are mounted.
